# EUROPÄISCHE PATENTANMELDUNG

(11) **EP 1 048 247 A1**
(43) Veröffentlichungstag der Anmeldung: **02.11.2000**
(21) Anmeldenummer: 00104060.9
(22) Anmeldetag: 28.02.2000
(51) Int. Cl.: A47C 20/04, E05D 11/06

(54) **Gelenkbeschlag**

(30) Priorität: 28.04.1999 DE 29907520 U
(71) Anmelder: Franke GmbH & Co. KG, D-72336 Balingen (DE)
(72) Erfinder: Sauter, Karl-J-rgen, Dipl.-Ing., 72469 Messstetten (DE)
(74) Vertreter: Dantz, Jan Henning (DE)

(57) **Zusammenfassung**

Gegenstand der Erfindung ist ein Gelenkbeschlag (1) mit zwei durch einen Gelenkbolzen (4) miteinander verbundenen Laschen (2, 3), wobei der maximal mögliche Schwenkwinkel der beiden Laschen (2, 3) mechanisch begrenzt ist.

Zur Schwenkwinkel-Begrenzung ist zumindest auf einer Seite des Gelenkbeschlages (1) eine den Gelenkbereich überdeckende und mit beiden Laschen (2, 3) verbundene Anschlagplatte (5) vorgesehen, die jeweils in einem vorbestimmten Abstand zur Gelenkachse und durch einen sowohl die Anschlagplatte (5) wie auch die jeweilige Lasche (2, 3) durchtretenden Verbindungsbolzen (6) mit den Laschen (2, 3) verbunden ist, wobei die Anschlagplatte (5) im Durchtrittsbereich der Verbindungsbolzen (6) mit Langlöchern (8) versehen ist.

## Beschreibung

Die vorliegende Erfindung betrifft einen Gelenkbeschlag mit zwei durch einen Gelenkbolzen miteinander verbundenen Laschen, insbesondere zur Verwendung als Hochstellbeschlag für Liegerahmen, Lattenroste oder dergleichen, wobei der maximal mögliche Schwenkwinkel der beiden Laschen ― ausgehend von einer Strecklage ― mechanisch begrenzt ist.

Gelenkbeschläge der gattungsgemäßen Art sind an sich bekannt.

Bei den bekannten Gelenkbeschlägen der gattungsgemäßen Art ist in der Regel eine Begrenzung des maximal möglichen Schwenkwinkels dadurch gegeben, daß eine der beiden Laschen im Gelenkbereich angekröpft ist und daß durch diese Abkröpfung ein Anschlag für die benachbarte Lasche gebildet ist.

Bei derartigen Konstruktionen beträgt der mögliche maximale Schwenkwinkel, bezogen auf die Strecklage, nahezu 90°. Ein derart großer maximaler Schwenkwinkel ist in vielen Fällen unerwünscht, insbesondere bei der Verwendung eines derartigen Gelenkbeschlages als Hochstellbeschlag für Liegerahmen, Lattenroste oder dergleichen.

Außerdem ist bei den bekannten Gelenkbeschlägen eine Quetsch- und somit Verletzungsgefahr im unmittelbaren Gelenkbereich nicht auszuschließen.

Der vorliegenden Erfindung liegt die Aufgabe zugrunde, einen Gelenkbeschlag der gattungsgemäßen Art zu schaffen, bei dem auf einfache Art und Weise eine Schwenkwinkel-Begrenzung erreicht und gleichzeitig die Verletzungsgefahr durch Quetschungen im Gelenkbereich beseitigt ist.

Diese Aufgabe wird gemäß einem ersten Vorschlag erfindungsgemäß dadurch gelöst, daß zur Schwenkwinkel-Begrenzung zumindest auf einer Seite des Gekenkbeschlages eine den Gelenkbereich überdeckende und mit beiden Laschen verbundene Anschlagplatte vorgesehen ist, die jeweils in einem vorbestimmten Abstand zur Gelenkachse und durch einen sowohl die Anschlagplatte wie auch die jeweilige Lasche durchtretenden Verbindungsbolzen mit den Laschen verbunden ist und daß die Anschlagplatte im Durchtrittsbereich der Verbindungsbolzen mit Langlöchern versehen ist.

Eine zweite Lösung der erfindungsgmäßen Aufgabe besteht darin, daß zur Schwenkwinkel-Begrenzung zumindest auf einer Seite des Gelenkbeschlages eine den Gelenkbereich überdeckende und mit beiden Laschen verbundene Anschlagplatte vorgesehen ist, die jeweils in einem vorbestimmten Abstand zur Gelenkachse und durch einen sowohl die Anschlagplatte wie auch die jeweilige Lasche durchtretenden Verbindungsbolzen mit den Laschen verbunden ist und daß die Laschen im Durchtrittsbereich des Gelenkbolzens mit Langlöchern versehen sind.

Gemeinsam ist beiden Lösungsvorschlägen die Verbindung zumindest einer Anschlagplatte, die den Gelenkbereich überdeckt.

Dadurch wir in beiden Fällen der von einem Benutzer zugängliche Bereich des Gelenkbeschlages schützend überdeckt und die Gefahr von Verletzungen durch Einquetschungen vermieden.

Außerdem wird durch die Anschlagplatte in beiden Fällen der maximale Schwenkwinkel der beiden Laschen relativ zueinander begrenzt, wobei im Falle des ersten Lösungsvorschlages diese Begrenzung vorrangig durch die Langlöcher in der Anschlagplatte und beim zweiten Lösungsvorschlag durch die Langlöcher der Laschen im Bereich des Gelenkbolzens erzielt wird.

In vielen Fällen wird zum Schutz gegen Verletzungsgefahr die einseitige Abdekkung des Gelenkbeschlages im unmittelbaren Gelenkbereich ausreichend sein, es ist ohne weiteres aber auch möglich, eine derartige Abdeckplatte auf beiden Seiten des Gelenkbeschlages anzubringen.

Ein besonderer Vorteil der weiter oben zuerst genannten Lösung der erfindungsgemäßen Aufgabe ist darin zu sehen, daß Gelenkbeschläge der gattungsgemäßen Art auch nach träglich noch auf einfache und vorteilhafte Art und Weise im Sinne der vorliegenden Erfindung aufgerüstet werden können.

Weitere Merkmale der Erfindung sind Gegenstand von Unteransprüchen.

Ein bevorzugtes Ausführungsbeispiel der Erfindung ist in den beigefügten Zeichnungen dargestellt und wird im folgenden näher beschrieben.

Es zeigen:
- Figur 1: eine Ansicht eines erfindungsgemäßen Gelenkbeschlages in Strecklage,
- Figur 2: eine Ansicht des Gelenkbeschlages in maximaler Verschwenkstellung,
- Figur 3: eine perspektivisch dargestellte Rückansicht des Gelenkbeschlages nach den Figuren 1 und 2,
- Figur 4: einen Längsschnitt durch den Gelenkbeschlag in Strecklage,
- Figur 5: eine perspektivische Darstellung einer Anschlagplatte des Gelenkbeschlages,
- Figur 6: einen Längsschnitt durch die Anschlagplatte gemäß Figur 5.

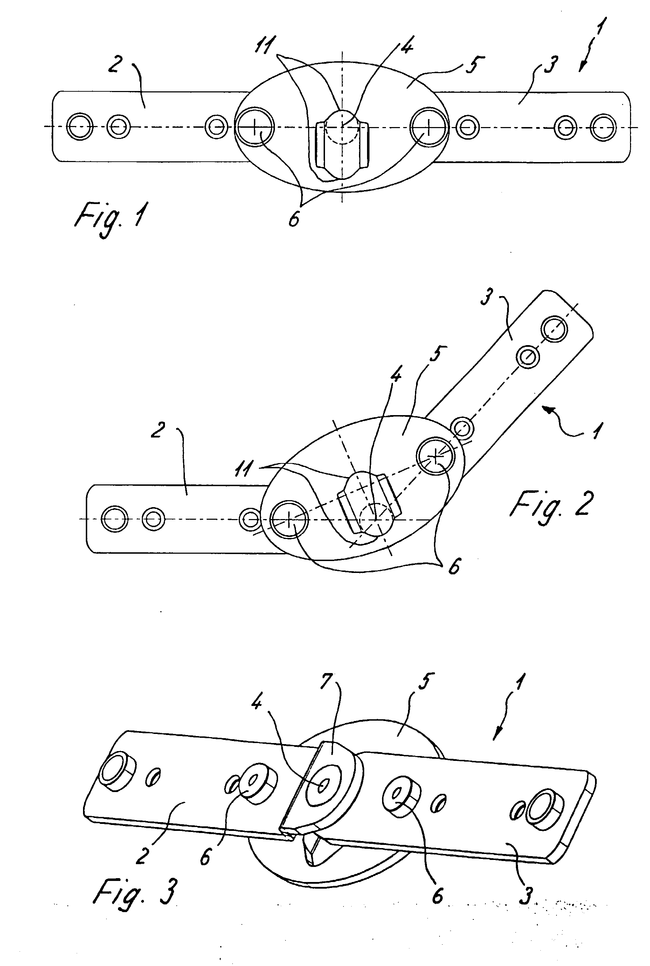

In den Figuren 1-4 ist ein erfindungsgemäßer und insgesamt mit dem Bezugszeichen 1 bezeichneter Gelenkbeschlag dargestellt, der im wesentlichen aus zwei gelenkig miteinander verbundenen Laschen 2 und 3, einem Gelenkbolzen 4, einer Anschlagplatte 5 sowie zwei Verbindungsbolzen 6 besteht, mittels derer die Anschlagplatte 5 mit den Laschen 2 und 3 verbunden ist.

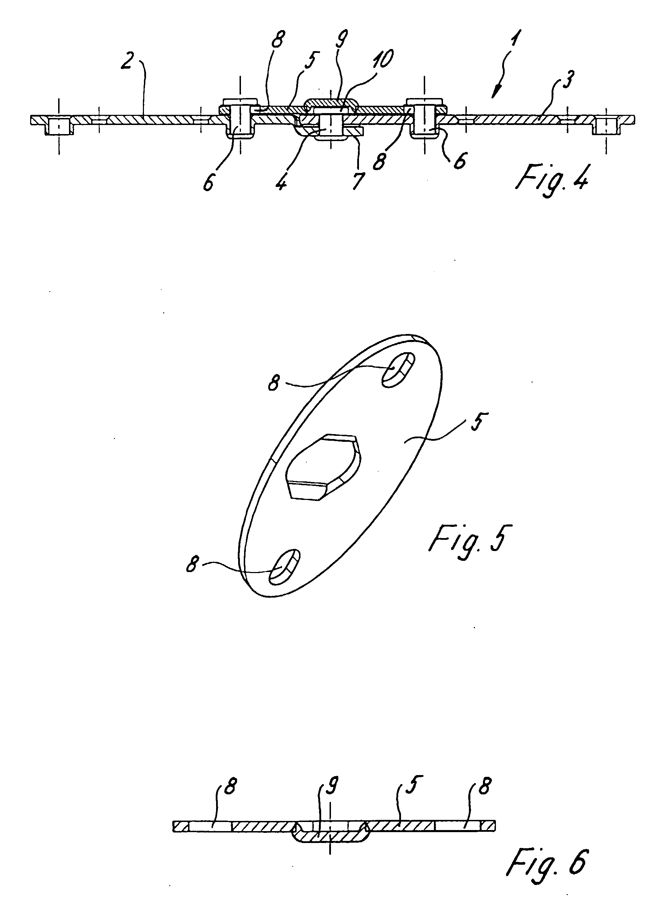

Wie die Figuren 3 und 4 deutlich machen, ist die mit dem Bezugszeichen 2 bezeichnete Lasche im Bereich des Gelenkbolzens 4 mit einer Abkröpfung 7 versehen, wobei das Maß dieser Abkröpfung 7 etwa der Materialstärke der Laschen 2 oder 3 entspricht, so daß die nicht abgekröpfte Lasche 3 in einer Ebene mit dem ungekröpften Bereich der Lasche 2 liegt.

Durch den Gelenkbolzen 4 sind die beiden Laschen 2 und 3 gelenkig miteinander verbunden.

In einem Abstand zur Gelenkachse ist die Anschlagplatte 5 durch die erwähnten Verbindungsbolzen 6, beispielsweise in Form von Nietbolzen oder von Schrauben, mit den beiden Laschen 2 und 3 verbunden.

Wie aus den Figuren 4-6 deutlich hervorgeht, ist die Anschlagplatte 5 im Durchtrittsbereich der Verbindungsbolzen 6 mit Langlöchern 8 ausgestattet.

Die Figuren 4-6 zeigen weiterhin sehr deutlich, daß die Anschlagplatte 5 im mittleren, im montierten Zustand im Gelenkbereich liegenden Abschnitt mit einer sickenartigen Ausprägung 9 versehen ist, deren Tiefe mindestens der Dicke des in diesem Bereich liegenden Kopfes 10 des Gelenkbolzens 4 entspricht.

Dieser Kopf 10 des Gelenkbolzens 4 kann sich also im ausgeprägten Bereich der Sicke 9 frei bewegen.

Die Langlöcher 8 der Anschlagplatte 5 sind konstruktiv so gewählt, daß eine Verschwenkung der beiden Laschen 2 und 3 gegeneinander aus der in Figur 1 ersichtlichen Strecklage heraus nur bis zu einem vorbestimmten und gewünschten Winkelbetrag möglich ist. In diesem Falle liegen dann die Verbindungsbolzen 6 umfangsseitig an den einander zugewandt liegenden Enden der beiden Langlöcher 8 an, wohingegen die Verbindungsbolzen 6 bei in Strecklage befindlichem Gelenkbeschlag maximal von den einander gegenüberliegenden Enden Langlöcher 8 entfernt sind, so wie dies Figur 4 deutlich zeigt.

Durch die Länge der Langlöcher 8 kann somit Einfluß genommen werden auf den maximal möglichen Schwenkwinkel zwischen den beiden Laschen 2 und 3.

Während des Verschwenkens der beiden Laschen 2 und 3 relativ zueinander bewegt sich der Kopf 10 des Gelenkbolzens 4 innerhalb der Ausprägung der Sicke 9, so daß bei Bedarf auch die Länge der Sicke 9 zur Schwenkwinkel-Begrenzung genutzt werden könnte. In diesem Falle könnten die Langlöcher 8 größer sein als in Figur 4 dargestellt, da die Schwenkwinkel-Begrenzung durch Anschlagen des Kopfes 10 des Gelenkbolzens 4 an den stirnseitigen Enden 11 der Sicke 9 erfolgen würde.

Bevorzugt ist aber die weiter oben angegebene Lösung, die darin besteht, die Schwenkwinkel-Begrenzung durch die Bemessung der Langlöcher 8 zu wählen.

Im dargestellten Ausführungsbeispiel ist lediglich auf einer Seite des Gelenkbeschlages eine Anschlagplatte 5 vorgesehen. Abweichend hiervon ist es auch denkbar, eine entsprechende, zusätzliche Anschlagplatte 5 auf der gegenüberliegenden Seite anzubringen, so daß der Gelenkbereich beidseitig schützend überdeckt ist.

Zusätzlich würde hiermit der Vorteil erzielt, daß ein derartiger Gelenkbeschlag ohne weiteres sowohl rechts- wie auch linksseitig verwendbar wäre.

Die Anbringung einer oder zweier Anschlagplatten 5 an den Laschen 2 und 3 ist auch bei Gelenkbeschlägen bisher verwendeter Art ohne weiteres möglich, so daß bei Bedarf entsprechende Gelenkbeschläge auch nachträglich mit einer Schwenkwinkel-Begrenzung im vorstehend erläuterten Sinne ausgestattet werden können.

Eine schützende Überdeckung des Gelenkbereiches zwischen den beiden Laschen 2 und 3 bei gleichzeitiger Erzielung einer Schwenkwinkel-Begrenzung ist auch dadurch möglich, daß in Abweichung von der in den Zeichnungen gezeigten Konstruktion die Verbindungsbolzen 6 die Anschlagplatte 5 nicht im Bereich eines Langloches, sondern einer einfachen Bohrung durchtreten und die Anordnung von Langlöchern im unmittelbaren Gelenkbereich der Laschen 2 und 3 erzielt wird.

Mit dieser erfindungsgemäßen Konstruktion werden die gleichen Vorteile erzielt wie bei der Beschreibung des in den Zeichnungen dargestellten Ausführungsbeispieles der Erfindung.

Die Verbindungsbolzen 6 zur Verbindung der Anschlagplatte 5 mit den Laschen 2 und 3 können sowohl aus Nietbolzen wie auch aus Schraubenbolzen bestehen.

Die Anschlagplatte 5 kann statt der dargestellten und beschriebenen Ausprägung auch ausschließlich mit einem Langloch versehen sein.

## Patentansprüche

1. Gelenkbeschlag mit zwei durch einen Gelenkbolzen miteinander verbundenen Laschen, insbesondere zur Verwendung als Hochstellbeschlag für Liegerahmen, Lattenroste oder dergleichen, wobei der maximal mögliche Schwenkwinkel der beiden Laschen ― ausgehend von einer Strecklage ― mechanisch begrenzt ist, **dadurch gekennzeichnet**, daß zur Schwenkwinkel-Begrenzung zumindest auf einer Seite des Gelenkbeschlages (1) eine den Gelenkbereich überdeckende und mit beiden Laschen (2, 3) verbundene Anschlagplatte (5) vorgesehen ist, die jeweils in einem vorbestimmten Abstand zur Gelenkachse und durch einen sowohl die Anschlagplatte (5) wie auch die jeweilige Lasche (2, 3) durchtretenden Verbindungsbolzen (6) mit den Laschen (2, 3) verbunden ist und daß die Anschlagplatte (5) im Durchtrittsbereich der Verbindungsbolzen (6) mit Langlöchern (8) versehen ist.

2. Gelenkbeschlag mit zwei durch einen Gelenkbolzen miteinander verbundenen Laschen, insbesondere zur Verwendung als Hochstellbeschlag für Liegerahmen, Lattenroste oder dergleichen, wobei der maximal mögliche Schwenkwinkel der beiden Laschen ― ausgehend von einer Strecklage ― mechanisch begrenzt ist, **dadurch gekennzeichnet**, daß zur Schwenkwinkel-Begrenzung auf mindestens einer Seite des Gelenkbeschlages (1) eine den Gelenkbereich überdeckende und mit den beiden Laschen (2, 3) verbundene Anschlagplatte (5) vorgesehen ist, die jeweils in einem vorbestimmten Abstand zur Gelenkachse und durch einen sowohl die Anschlagplatte (5) wie auch die jeweilige Lasche (2, 3) durchtretenden Verbindungsbolzen (6) mit den Laschen (2, 3) verbunden ist und daß die Laschen (2, 3) im Durchtrittsbereich des Gelenkbolzens (4) mit Langlöchern versehen sind.

3. Gelenkbeschlag nach Anspruch 1 oder 2, **dadurch gekennzeichnet**, daß auf beiden Seiten des Gelenkbeschlages (1) Anschlagplatten (5) angeordnet sind.

4. Gelenkbeschlag nach einem der vorhergehenden Ansprüche, **dadurch gekennzeichnet**, daß jede Anschlagplatte (5) im Gelenkbereich mit einer langgestreckten, ausgeprägten Sicke (9) versehen ist.

5. Gelenkbeschlag nach Anspruch 4, **dadurch gekennzeichnet**, daß die ausgeprägte Sicke (9) einen über die Laschen (2, 3) hinaus vorstehenden Kopf (10) des Gelenkbolzens (4) überdeckt.

6. Gelenkbeschlag nach einem der vorhergehenden Ansprüche, **dadurch gekennzeichnet**, daß die Schwenkwinkel-Begrenzung durch die Langlöcher (8) der Anschlagplatte (5) festgelegt ist.

7. Gelenkbeschlag nach einem oder mehreren der vorhergehenden Ansprüche, **dadurch gekennzeichnet**, daß die Schwenkwinkel-Begrenzung durch die Langlöcher im Durchtrittsbereich des Gelenkbolzens (4) festgelegt ist.

8. Gelenkbeschlag nach einem oder mehreren der vorhergehenden Ansprüche, **dadurch gekennzeichnet**, daß jede Anschlagplatte (5) im Gelenkbereich mit einem Langloch versehen ist.
